# EUROPEAN PATENT APPLICATION

(11) **EP 4 817 868 A1**
(43) Date of publication of application: **07.10.2026**
(21) Application number: 24897638.3
(22) Date of filing: 28.11.2024
(51) Int. Cl.: B32B 9/00, B65D 65/40, C08L 23/10

(54) **LAMINATED FILM, UNSTRETCHED FILM, POLYPROPYLENE-BASED POLYMER COMPOSITION, AND PROPYLENE-BASED POLYMER**

(30) Priority: 30.11.2023 JP 2023202784
(71) Applicant: Prime Polymer Co., Ltd., Tokyo 104-0028 (JP)
(72) Inventor: MURAKAMI, Tomoya, Ichihara-shi, Chiba 299-0108 (JP); MIZUKAWA, Tomoaki, Tokyo 104-0028 (JP); TAKAI, Nagi, Ichihara-shi, Chiba 299-0108 (JP)
(74) Representative: J A Kemp LLP
(86) International application number: PCT/JP2024/042139
(87) International publication number: WO 2025/115954

(57) **Abstract**

Disclosed are: a polypropylene-based polymer composition containing 85 to 95% by mass of a resin A and 5 to 15% by mass of a resin B (wherein the total amount of the resin A and the resin B is 100% by mass); a laminated film provided with a non-oriented film formed from the polymer composition and a layer formed by vapor-depositing an inorganic oxide; and a propylene-based polymer containing the resin B;
Resin A: A resin having a melting point of 120 to 170°C and an intrinsic viscosity [η] of greater than 1.5 dl/g and 5.0 dl/g or less;
Resin B: A resin containing 10 to 40% by mass of a propylene-based polymer (b1) having an intrinsic viscosity [η] in the range of 10 to 12 dl/g, and 60 to 90% by mass of a propylene-based polymer (b2) having an intrinsic viscosity [η] of greater than 1.5 dl/g and 2.5 dl/g or less (wherein the total amount of the polymer (b1) and the polymer (b2) is 100% by mass).

## Description

### Technical Field

The present invention relates to a non-oriented film, a polypropylene-based polymer composition, and a propylene-based polymer.

### Background Art

Propylene-based polymers are widely used as materials for various molded articles. For example, films composed of propylene-based polymers are widely used as packaging films for foods and miscellaneous goods, taking advantage of their excellent mechanical properties such as rigidity and optical properties such as gloss. Non-oriented polypropylene films are known to have balanced and excellent rigidity and heat resistance.

In order to preserve food for long periods, packaging materials having excellent gas barrier properties for blocking oxygen and water vapor from the outside air, which promote spoilage and deterioration, are used. As materials having gas barrier properties, for example, aluminum foils, aluminum vapor-deposited films, polyvinylidene chloride-coated films, and ethylene-vinyl alcohol films have conventionally been used.

On the other hand, transparent gas barrier films in which oxides such as silicon oxide or aluminum oxide are vapor-deposited on non-oriented polypropylene films are known.

As a transparent, non-oriented polypropylene film that has high gas barrier properties, excellent suitability for secondary processing such as slitting and lamination, and is suitable for various packaging applications, for example, Patent Literature 1 discloses a metal oxide-deposited non-oriented polypropylene film characterized in that the film is obtained by vapor-depositing a metal oxide onto a film formed from a mixed resin of 85 to 99 wt% of a polypropylene random copolymer and 15 to 1 wt% of high-density polyethylene, to which 0.05 to 0.5 parts by weight of a lubricant has been added, the metal oxide-deposited film having a Young's modulus of 0.7 GPa or more in at least one direction, a light transmittance of 60 to 90%, and a water vapor transmission rate of 2.5 g/m²·d or less.

In addition, as a transparent, non-oriented film that has high gas barrier properties, excellent suitability to secondary processing such as slitting and lamination, and is suitable for various packaging applications, for example, Patent Literature 2 discloses a metal oxide-deposited non-oriented film characterized in that the film is obtained by vapor-depositing a metal oxide onto a non-oriented film having a density of 0.9 g/cm³ or more and a crystalline melting enthalpy of 75 J/g or more, the metal oxide-deposited film having a light transmittance of 60 to 90% and a water vapor transmission rate of 2.5 g/m²·d or less.

### Citation List

### Patent Literature

Patent Literature 1: JPH9-156021A
Patent Literature 2: JPH9-143294A

### Summary of Invention

### Technical Problem

With the expansion of regulations relating to environmental issues in recent years, the use of materials that generate incineration residues, such as aluminum foil, has been restricted. In addition, aluminum foils and aluminum vapor-deposited films have the issues that the contents cannot be seen and that they cannot be heated in a microwave oven. Transparent gas barrier films have advantages in that they have excellent gas barrier properties, entail a low environmental burden, allow the contents to be confirmed, and can also be used in microwave ovens.

However, the metal oxide-deposited non-oriented polypropylene films described in the above Patent Literature 1 and 2 still had room for improvement in terms of appearance (for example, wrinkles on the film surface). In addition, the films described in the above Patent Literature 1 and 2 still had room for improvement in terms of gas barrier properties, particularly water vapor barrier properties.

An object of one embodiment of the present invention is to provide a laminated film that is excellent in suppressing wrinkle formation and in gas barrier properties. Another object of one embodiment of the present invention is to provide a non-oriented polypropylene film having excellent gas barrier properties. A further object of one embodiment of the present invention is to provide a polypropylene-based polymer composition and a propylene-based polymer from which a film having excellent gas barrier properties can be obtained.

### Solution to Problem

Means for solving the above problems include the following aspects.
<1> A laminated film comprising:
   a non-oriented film formed from a polypropylene-based polymer composition comprising 85 to 95% by mass of the following resin A and 5 to 15% by mass of the following resin B (wherein the total amount of the resin A and the resin B is 100% by mass); and
   a layer formed by vapor-depositing an inorganic oxide;
   Resin A: a propylene-based polymer having a melting point of 120 to 170°C and an intrinsic viscosity [η] of greater than 1.5 dl/g and 5.0 dl/g or less;
   Resin B: a propylene-based polymer comprising 10 to 40% by mass of a propylene-based polymer (b1) having an intrinsic viscosity [η] in the range of 10 to 12 dl/g, and 60 to 90% by mass of a propylene-based polymer (b2) having an intrinsic viscosity [η] of greater than 1.5 dl/g and 2.5 dl/g or less (wherein the total amount of the propylene-based polymer (b1) and the propylene-based polymer (b2) is 100% by mass).
<2> The laminated film according to <1>, wherein the inorganic oxide comprises aluminum oxide or silicon oxide.
<3> The laminated film according to <1> or <2>, wherein the layer formed by vapor-depositing the inorganic oxide has a thickness of 5 to 100 nm.
<4> The laminated film according to any one of <1> to <3>, wherein an oxygen transmission rate is 2,000 (cm³/m²·day·atm) or less.
<5> The laminated film according to any one of <1> to <4>, wherein a tensile modulus at 80°C is 800 MPa or more.
<6> The laminated film according to any one of <1> to <5>, wherein the tensile modulus in the MD direction at 80°C is 800 MPa or more.
<7> The laminated film according to any one of <1> to <6>, further comprising a biaxially oriented polypropylene film.
<8> A polypropylene-based polymer composition comprising:
   85 to 95% by mass of the following resin A; and
   5 to 15% by mass of the following resin B,
   wherein the total amount of the resin A and the resin B is 100% by mass;
   Resin A: a propylene-based polymer having a melting point of 120 to 170°C and an intrinsic viscosity [η] of greater than 1.5 dl/g and 5.0 dl/g or less;
   Resin B: a propylene-based polymer comprising 10 to 40% by mass of a propylene-based polymer (b1) having an intrinsic viscosity [η] in the range of 10 to 12 dl/g, and 60 to 90% by mass of a propylene-based polymer (b2) having an intrinsic viscosity [η] of greater than 1.5 dl/g and 2.5 dl/g or less (wherein the total amount of the propylene-based polymer (b1) and the propylene-based polymer (b2) is 100% by mass).
<9> A non-oriented film formed from the polypropylene-based polymer composition according to <8>.
<10> A propylene-based polymer comprising:
   10 to 40% by mass of a propylene-based polymer (b1) having an intrinsic viscosity [η] in the range of 10 to 12 dl/g; and
   60 to 90% by mass of a propylene-based polymer (b2) having an intrinsic viscosity [η] of greater than 1.5 dl/g and 2.5 dl/g or less (wherein the total amount of the propylene-based polymer (b1) and the propylene-based polymer (b2) is 100% by mass).

### Advantageous Effects of Invention

According to one embodiment of the present invention, a laminated film that is excellent in suppressing wrinkle formation and in gas barrier properties is provided. In addition, according to one embodiment of the present invention, a non-oriented polypropylene film having excellent gas barrier properties is provided. Moreover, according to one embodiment of the present invention, a polypropylene-based polymer composition and a propylene-based polymer from which a film having excellent gas barrier properties can be obtained is provided.

### Description of Embodiments

Specific embodiments of the present invention will be described in detail below. The descriptions of the constituent features given below may be made based on representative embodiments of the present invention. However, the present invention is not limited in any way to the following embodiments but can be implemented with appropriate modifications within the scope of the present invention.

In the present specification, a numerical range expressed with "to" means a range including numerical values placed before and after "to" as a lower limit value and an upper limit value, respectively.

In the present specification, the amount of the respective component means, when there are a plurality of substances corresponding to the component in the composition, the total amount of the substances present in the composition, unless otherwise specified.

In the present specification, "to" indicating a numerical value range means that the unit placed either before or after "to" represents the same unit, unless otherwise specified.

In the present specification, a combination of two or more preferred embodiments is a more preferred embodiment.

In the present specification, MD direction denotes the Machine Direction, meaning the extrusion direction during the film forming process, and TD direction denotes the Transverse Direction, meaning the direction orthogonal (that is, perpendicular) to the MD direction.

Hereafter, the present invention will be described in more detail.

### <Laminated Film>

The laminated film according to the present invention is provided with a non-oriented film formed from a polypropylene-based polymer composition containing 85 to 95% by mass of the following resin A and 5 to 15% by mass of the following resin B (wherein the total amount of the resin A and the resin B is 100% by mass), and a layer formed by vapor-depositing an inorganic oxide. With the above configuration, the laminated film is excellent in suppressing wrinkle formation and in gas barrier properties. While the reason for this is not clear, the following mechanism is presumed.

It is presumed that low molecular weight components in the polymer composition forming the resin film flow under the stress and heat applied during vapor deposition of the inorganic oxide onto the resin film. When the resin on the surface of the resin film flows during vapor deposition of the inorganic oxide onto the resin film, fine voids may form between the barrier layer (that is, the layer formed by vapor-depositing the inorganic oxide) and the resin film, and the adhesive strength may be reduced. Therefore, it is presumed that a smaller amount of low molecular weight components in the polymer composition is effective in improving gas barrier properties.

The laminated film according to the present invention is provided with a non-oriented film formed from a polypropylene-based polymer composition containing a specific resin A and a specific resin B in specific amounts. It is presumed that incorporating a specific resin B into the polypropylene-based polymer composition reduces the amount of low molecular weight components in the polymer composition, thereby allowing the laminated film to exhibit excellent gas barrier properties.

Hereinafter, the components contained in each layer constituting the laminated film will be described in detail.

### <Propylene-Based Polymer Composition>

The polypropylene-based polymer composition contains 85 to 95% by mass of the following resin A and 5 to 15% by mass of the following resin B (wherein the total amount of the resin A and the resin B is 100% by mass). Since the propylene-based polymer composition contains a specific amount of the resin A and a specific amount of the resin B, the resulting film exhibits excellent gas barrier properties, and when a laminated film is formed, it is also excellent in suppressing wrinkle formation.

### <<Resin A>>

The resin A is a propylene-based polymer having a melting point of 120 to 170°C and an intrinsic viscosity [η] of greater than 1.5 dl/g and 5.0 dl/g or less.

### [Melting point (Tm)]

The melting point (Tm) of the resin A is 120 to 170°C, and, from the viewpoint of formability and heat resistance, is preferably 125 to 170°C, and more preferably 130 to 170°C. The melting point can be measured using a differential scanning calorimeter (DSC), and specifically, it is determined by the measurement method described in the Examples.

### [Intrinsic Viscosity [η]]

The intrinsic viscosity [η] of the resin A is greater than 1.5 dl/g and 5.0 dl/g or less, preferably greater than 1.5 dl/g and 4.5 dl/g or less, and more preferably greater than 1.5 dl/g and 4.0 dl/g or less.

When the intrinsic viscosity [η] is within the above range, good productivity can be achieved during film formation, and the resulting laminated film exhibits excellent impact resistance.

The above intrinsic viscosity [η] is the intrinsic viscosity [η] measured at 135°C in a tetralin solvent, and is determined by the measurement method described in the Examples.

### [Melt Flow Rate (MFR)]

The melt flow rate (MFR) of the resin A measured at 230°C and a load of 2.16 kg is preferably 5 to 40 g/10 min, more preferably 6 to 35 g/10 min. When a resin A having an MFR within the above range is used, good productivity can be achieved during film formation, and the resulting film exhibits good impact resistance.

### [Molecular Weight Distribution (Mw/Mn)]

The molecular weight distribution (Mw/Mn) of the resin A measured by gel permeation chromatography (GPC) is preferably 3.0 or more, more preferably 4.0 to 8.0, still more preferably 4.1 to 6.0 or less, and particularly preferably 4.5 to 6.0.

When the Mw/Mn of the resin A is within the above range, the laminated film exhibits excellent rigidity and transparency.

The molecular weight distribution (Mw/Mn) is determined by the measurement method described in the Examples.

### [Composition]

The resin (A) is not particularly limited in structure as long as it is a propylene-based polymer having a melting point of 120 to 170°C and an intrinsic viscosity [η] of greater than 1.5 dl/g and 5.0 dl/g or less. The resin (A) may be, for example, a homopolymer of propylene or a copolymer of propylene and an α-olefin (excluding propylene).

Examples of the above copolymer include a propylene/α-olefin random copolymer, a block-type propylene copolymer (a mixture of a propylene homopolymer or a propylene/α-olefin random copolymer and an amorphous or low-crystalline propylene/α-olefin random copolymer), and random block polypropylene.

Examples of the above α-olefin include α-olefins having 2 to 12 carbon atoms such as ethylene, 1-butene, 1-pentene, 1-hexene, 1-heptene, 1-octene, 1-decene, 4-methyl-1-pentene, and 3-methyl-1-pentene. Of these α-olefins, ethylene, 1-butene, 1-hexene, 1-octene, and 4-methyl-1-pentene are preferred. One or more α-olefins may be used.

In the copolymer of propylene and an α-olefin, the content ratio of structural units derived from propylene is usually 90 to 99.9% by mass, preferably 92 to 99.5% by mass, and more preferably 94 to 99% by mass, while the content ratio of structural units derived from the α-olefin (excluding propylene) is usually 0.1 to 10% by mass, preferably 0.5 to 8% by mass, and more preferably 1 to 6% by mass. The above content ratio can be measured and determined by ¹³C-NMR.

From the viewpoint of rigidity and impact strength, the resin (A) is preferably a propylene homopolymer.

The method for producing the resin (A) is not particularly limited, and examples thereof include a method of homopolymerizing propylene or copolymerizing propylene with another α-olefin using a catalyst. The resin (A) may also be a commercially available polypropylene-based resin.

Examples of the catalyst used to produce the resin A include a catalyst formed from a solid catalyst component containing magnesium, titanium, and a halogen as essential components, an organometallic compound catalyst component such as an organoaluminum compound, and an electron-donating compound catalyst component such as an organosilicon compound (typical examples of which include the catalysts described in paragraphs [0050] to [0075] of WO2021/025142); and a metallocene catalyst in which a metallocene compound is used as one component of the catalyst.

The resin A may contain at least one biomass-derived monomer.

Monomers of the same kind that constitute the resin A may be only biomass-derived monomers, may be only fossil fuel-derived monomers, or may include both a biomass-derived monomer and a fossil fuel-derived monomer.

The biomass-derived monomer refers to monomers produced by using, for example, plant-derived or animal-derived every reproducible natural raw material including fungi, yeast, algae, and bacteria, and residues thereof as the raw material, in which ¹⁴C isotopes are included as the carbon in a proportion of about 1 × 10⁻¹², and the biomass carbon concentration (pMC) measured in accordance with ASTM D6866 is about 100 (pMC). The method for synthesizing the biomass-derived monomer (for example, propylene or an α-olefin having 2 to 8 carbon atoms, excluding propylene) is not particularly limited, and any conventionally known method may be used. The resin A preferably contains the biomass-derived monomer from the viewpoint of reducing an environmental impact.

Even when the resin A (that is, the propylene-based polymer) is obtained from a raw material olefin containing a biomass-derived olefin, the molecular structure thereof except for ¹⁴C isotopes included in a proportion of about 1 × 10⁻¹² is considered to be equivalent to that of a resin A (that is, a propylene-based polymer) consisting of a fossil fuel-derived monomer, and the performance is considered as unchanged, as long as the polymer production conditions such as the catalyst for polymerization and the polymerization temperature are equivalent.

The resin A may contain at least one chemical recycling-derived monomer. Monomers of the same kind that constitute the resin A may be only chemical recycling-derived monomers, or may contain a chemical recycling-derived monomer and a fossil fuel-derived monomer and/or biomass-derived monomer.

The method for synthesizing the chemical recycling-derived monomer (for example, propylene or an α-olefin having 2 to 8 carbon atoms, excluding propylene) is not particularly limited, and any conventionally known method may be used, for example. The resin A preferably contains the chemical recycling-derived monomer from the viewpoint of reducing an environmental impact (mainly waste reduction). The chemical recycling-derived monomer is a monomer obtained by restoring a polymer such as waste plastic up to the monomer unit such as propylene by depolymerization or thermal decomposition, or a monomer produced using the above monomer as a raw material. Therefore, even when the propylene-based polymer is obtained from a raw material monomer containing a chemical recycling-derived monomer, the molecular structure thereof is considered to be equivalent to that of a resin A (that is, a propylene-based polymer) consisting of a fossil fuel-derived monomer, and the performance is considered as unchanged, as long as the polymer production conditions such as the catalyst for polymerization, the polymerization process, and the polymerization temperature are equivalent.

### <Resin B>

The resin B is a propylene-based polymer containing 10 to 40% by mass of a propylene-based polymer (b1) having an intrinsic viscosity [η] in the range of 10 to 12 dL/g, and 60 to 90% by mass of a propylene-based polymer (b2) having an intrinsic viscosity [η] of greater than 1.5 dL/g and 2.5 dL/g or less (wherein the total amount of the propylene-based polymer (b1) and the propylene-based polymer (b2) is 100% by mass).

Both the above intrinsic viscosity [η] and the intrinsic viscosity [η] described below are the intrinsic viscosity [η] measured at 135°C in a tetralin solvent, and are specifically determined by the measurement method described in the Examples below.

### <<Propylene-Based Polymer (b1)>>

The intrinsic viscosity [η] of the propylene-based polymer (b1) is 10 to 12 dL/g, preferably 10 to 11.5 dL/g.

When the intrinsic viscosity [η] is 10 dL/g or more, the laminated film exhibits excellent rigidity and heat resistance. When the intrinsic viscosity [η] is 12 dL/g or less, a non-oriented film can be produced with excellent formability, and excellent suppression of wrinkle formation on the film surface is achieved.

The mass fraction of the propylene-based polymer (b1) in the resin (B) is in the range of 10 to 40% by mass, preferably in the range of 10 to 30% by mass, more preferably 10 to 25% by mass, and still more preferably 10 to 20% by mass. Provided that the total amount of the propylene-based polymer (b1) and the propylene-based polymer (b2) is 100% by mass.

When the mass fraction of the propylene-based polymer (b1) is 10% by mass or more, the propylene-based polymer composition has sufficient melt tension and can form a non-oriented film excellent in rigidity and heat resistance. When the mass fraction of the propylene-based polymer (b1) is 40% by mass or less, wrinkle formation during forming of the non-oriented film can be suppressed.

The propylene-based polymer (b1) is not particularly limited, and examples thereof include a homopolymer of propylene and a copolymer of propylene and an α-olefin having 2 to 8 carbon atoms (excluding propylene). Examples of the α-olefin having 2 to 8 carbon atoms include ethylene, 1-butene, 1-hexene, 1-octene, and 4-methyl-1-pentene. Of the α-olefins having 2 to 8 carbon atoms, ethylene is preferred.

The α-olefin having 2 to 8 carbon atoms may be used singly or in combination of two or more thereof.

In the copolymer of propylene and an α-olefin having 2 to 8 carbon atoms, the content ratio of structural units derived from propylene is usually 90% by mass or more, preferably 95% by mass or more, and more preferably 98% by mass or more, while the content ratio of structural units derived from the α-olefin having 2 to 8 carbon atoms (excluding propylene) is usually 10% by mass or less, preferably 5% by mass or less, and more preferably 2% by mass or less. The content ratio can be measured and determined by ¹³C-NMR.

One or more of the above propylene-based polymers (b1) may be used.

### <<Propylene-Based Polymer (b2)>>

The intrinsic viscosity [η] of the propylene-based polymer (b2) is greater than 1.5 dL/g and 2.5 dL/g or less, preferably 1.8 to 2.5 dL/g, and more preferably 2.2 to 2.5 dL/g.

When the intrinsic viscosity [η] exceeds 1.5 dL/g, sufficient melt tension can be imparted to the resin (B), and when the intrinsic viscosity [η] is 2.5 dL/g or less, excellent formability in forming a non-oriented film can be achieved.

The mass fraction of the propylene-based polymer (b2) in the resin (B) is in the range of 60 to 90% by mass, preferably in the range of 70 to 90% by mass, more preferably 75 to 90% by mass, and still more preferably 80 to 90% by mass. Provided that the total amount of the propylene-based polymer (b1) and the propylene-based polymer (b2) is 100% by mass.

When the mass fraction of the propylene-based polymer (b2) is 60% by mass or more, wrinkle formation during forming of the non-oriented film can be suppressed. When the mass fraction of the propylene-based polymer (b2) is 90% by mass or less, sufficient melt tension can be imparted to the above resin (B), and the resulting laminated film exhibits excellent rigidity and heat resistance.

The propylene-based polymer (b2) is not particularly limited, and examples thereof include a homopolymer of propylene and a copolymer of propylene and an α-olefin having 2 to 8 carbon atoms (excluding propylene). Examples of the α-olefin having 2 to 8 carbon atoms include ethylene, 1-butene, 1-hexene, 1-octene, and 4-methyl-1-pentene. Of the α-olefins having 2 to 8 carbon atoms, ethylene is preferred.

The α-olefin having 2 to 8 carbon atoms may be used singly or in combination of two or more thereof.

In the copolymer of propylene and an α-olefin having 2 to 8 carbon atoms, the content ratio of structural units derived from propylene is usually 90% by mass or more, preferably 93% by mass or more, and more preferably 94% by mass or more, while the content ratio of structural units derived from the α-olefin having 2 to 8 carbon atoms (excluding propylene) is usually 10% by mass or less, preferably 7% by mass or less, and more preferably 6% by mass or less. The above content ratio can be measured by ¹³C-NMR.

The above propylene-based polymer (b2) may be used singly or in combination of two or more thereof.

The above resin B may contain, as necessary, additives such as an antioxidant, a neutralizer, a flame retardant, and a nucleating agent. The additive may be used singly or in combination of two or more thereof. The proportion of the additives in the resin B is not particularly limited and can be appropriately adjusted.

### <<Physical Properties of Resin B>>

### [Melt Flow Rate (MFR)]

The melt flow rate (MFR) of the resin B measured at 230°C and a load of 2.16 kg is preferably 0.1 to 5 g/10 min, more preferably 0.05 to 4 g/10 min, and still more preferably 0.1 to 3 g/10 min. When the MFR of the resin B is within the above range, the propylene-based polymer composition exhibits excellent formability in forming a non-oriented film.

### [Area ratio of high molecular weight region having a molecular weight of 1,500,000 or more]

The resin B has an area ratio of a high molecular weight region having a molecular weight of 1,500,000 or more (which corresponds to the mass ratio of high molecular weight components having a molecular weight of 1,500,000 or more), to the total area enclosed by a molecular weight distribution curve measured by gel permeation chromatography (GPC), which is preferably 7% or more, more preferably 10% or more, and still more preferably 11% or more. The upper limit of the above area ratio is, for example, 30% or less, and preferably 25% or less.

That the area ratio of the high molecular weight region occupies a specific proportion or more means that the resin B contains high molecular weight components having a molecular weight of 1,500,000 or more.

At least some of these high molecular weight components correspond to high molecular weight components having an intrinsic viscosity [η] of 10 to 12 dL/g. Accordingly, when the proportion of the high molecular weight components is within the above range, the melt tension of the resin B is further improved.

### [(MH/ML)]

The resin B preferably has two peaks in a molecular weight distribution curve measured by GPC.

Here, the ratio of the peak molecular weight on the high molecular weight side (MH) to the peak molecular weight on the low molecular weight side (ML) (hereinafter sometimes also referred to as "MH/ML") is preferably 10 or more and 100 or less, more preferably 10 or more and 70 or less, still more preferably 13 or more and 50 or less, even more preferably 15 or more and 50 or less, and particularly preferably 15 or more and 49 or less. When MH/ML is 10 or more, the gas barrier properties are further improved, and when MH/ML is 100 or less, the formation of wrinkles can be further suppressed.

### [Peak Molecular Weight (ML)]

The resin B has a peak molecular weight (ML) on the low molecular weight side of a molecular weight distribution curve measured by GPC, which is preferably 20,000 or more and 300,000 or less, more preferably 50,000 or more and 250,000 or less, still more preferably 100,000 or more and 200,000 or less, and even more preferably 110,000 or more and 200,000 or less, from the viewpoints of excellent viscosity and excellent formability in forming a non-oriented film from the propylene-based polymer composition.

### [Fish Eye (FE)]

The resin B has a number of fish eyes (FE) (FE number) of usually 100 or less, preferably 70 or less, and more preferably 50 or less. When the FE number exceeds 100, the appearance of the non-oriented film may deteriorate. By setting the FE number of the resin B within the above range, a film having a good appearance can be obtained.

The FE number is measured and determined as follows. A film having a thickness of 50 µm is obtained from the resin B by film formation using a 25 mm φ T-die film forming machine. For the obtained film, the number of fish eyes (FE) having a size of 100 µm or more is measured using an FE counter, and converted to the number per unit area (3,000 cm²) to determine the FE number.

### <<Method for Producing Resin B>>

The method for producing the resin B is not particularly limited, and examples thereof include various known production methods, such as the method described in paragraphs [0038] to [0075] of WO2021/025142.

The resin B may contain at least one biomass-derived monomer.

Monomers of the same kind that constitute the resin B may be only biomass-derived monomers, may be only fossil fuel-derived monomers, or may include both a biomass-derived monomer and a fossil fuel-derived monomer. The above biomass-derived monomer and fossil fuel-derived monomer have the same meanings as the biomass-derived monomer and fossil fuel-derived monomer in the above resin A.

The resin B may contain at least one chemical recycling-derived monomer. Monomers of the same kind that constitute the resin B may be only chemical recycling-derived monomers, or may contain a chemical recycling-derived monomer and a fossil fuel-derived monomer and/or biomass-derived monomer.

The above chemical recycling-derived monomer has the same meaning as the chemical recycling-derived monomer in the above resin A.

### [Additives]

The propylene-based polymer composition may contain, as long as the purpose of the present invention is not impaired, additives such as weathering stabilizers, heat stabilizers, antistatic agents, slipping agents, anti-blocking agents, antifogging agents, nucleating agents, decomposing agents, pigments, dyes, plasticizers, hydrochloric acid absorbers, antioxidants, crosslinking agents, crosslinking promoters, reinforcing agents, fillers, softeners, processing aids, activators, hygroscopic agents, adhesives, flame retardants, and release agents.

The additive may be used singly or in combination of two or more thereof.

The propylene-based polymer composition may contain a nucleating agent for improving transparency and heat resistance, for example. Examples of the nucleating agent include sorbitol-based compounds such as dibenzylidene sorbitol, organic phosphate ester compounds, rosinate compounds, C4 to C12 (that is, having 4 to 12 carbon atoms) aliphatic dicarboxylic acids, and metal salts thereof. Of these, the nucleating agent is preferably an organic phosphate ester compound.

One or more nucleating agents may be used.

The nucleating agent may be used in an amount of preferably 0.05 to 0.5 parts by mass, more preferably 0.1 to 0.3 parts by mass, based on 100 parts by mass of the total of the resin A and the resin B.

The propylene-based polymer composition may contain, as necessary, a resin other than the above resin A and resin B (hereinafter also referred to as the "other resin").

Examples of the other resin include polyethylene.

The content ratio of the other resin is preferably 2 parts by mass or less, more preferably 1 part by mass or less, and still more preferably 0.5 parts by mass or less, based on 100 parts by mass of the total of the resin A and the resin B.

The lower limit of the molecular weight distribution (Mw/Mn) of the propylene-based polymer composition, as measured by gel permeation chromatography (GPC), is preferably 5.0 or more, more preferably 5.5 or more, and still more preferably 6.0 or more. The upper limit of the above molecular weight distribution (Mw/Mn) is not particularly limited, but is, for example, 25 or less, preferably 20 or less, more preferably 15 or less, and still more preferably 10 or less.

Here, Mn is the number-average molecular weight, and Mw is the weight-average molecular weight. The molecular weight distribution (Mw/Mn) is determined by the measurement method described in the Examples to be described below.

Since a propylene-based polymer (b1) having a high molecular weight is used, the molecular weight distribution of the above propylene-based polymer composition is broadened. Accordingly, during film formation of the propylene-based polymer composition, the degree of orientation in the MD direction of forming increases, and it is presumed that the propylene-based polymer undergoes higher crystallization due to the orientation. Therefore, it is considered that a film having excellent rigidity, heat resistance, and gas barrier properties was obtained.

The melt flow rate (MFR) of the propylene-based polymer composition measured at 230°C and a load of 2.16 kg is usually 1 to 30 g/10 min, preferably 2 to 28 g/10 min, and more preferably 3 to 25 g/10 min.

In the propylene-based polymer composition, the content ratio of the resin A is 85 to 95% by mass, preferably 86 to 93% by mass, and more preferably 88 to 92% by mass, while the content ratio of the resin B is 5 to 15% by mass, preferably 6 to 13% by mass, and more preferably 8 to 12% by mass. Provided that the total amount of the resin A and the resin B is 100% by mass.

When the content ratio of the resin A is within the above range, excellent rigidity, heat resistance, and gas barrier properties are achieved, and the resulting film is excellent in transparency and in suppressing wrinkle formation.

The resin A and the resin B may each be contained in the composition singly, or two or more thereof may be contained in the composition.

In the polypropylene-based polymer composition containing the resin A and the resin B in the present invention, the content ratio of (structural units derived from ethylene and structural units derived from an α-olefin having 4 to 20 carbon atoms) to (structural units derived from propylene, structural units derived from ethylene, and structural units derived from an α-olefin having 4 to 20 carbon atoms) is preferably 10% by mass or less, more preferably 8% by mass or less, still more preferably 4% by mass or less, particularly preferably less than 2% by mass, and most preferably 1.4% by mass or less.

### <<Method for Producing Propylene-Based Polymer Composition>>

The propylene-based polymer composition can be produced by using any known method, and examples thereof include a method in which the resin A, the resin B, and, if necessary, additives are mixed with, for example, a Henschel mixer, a V-type blender, a ribbon blender, or a tumbler blender; and a method in which, after the mixing, melt-kneading is performed with, for example, a single-screw extruder, a twin-screw extruder, a kneader, a Banbury mixer, or rolls, followed by granulation or pulverization.

From the viewpoint of rigidity and heat resistance of the resulting film, and from the viewpoint of reducing fish eyes, the method for producing the propylene-based polymer composition is preferably a method in which a resin B containing a propylene-based polymer (b1) and a propylene-based polymer (b2), obtained by multistage polymerization in a batch-wise manner, is mixed with a resin A to prepare the propylene-based polymer composition.

### <Non-Oriented Film>

The non-oriented film according to the present invention is formed from the above polypropylene-based polymer composition. Since the non-oriented film contains the above specific propylene-based polymer composition, it exhibits higher rigidity, heat resistance, and gas barrier properties than conventional non-oriented polypropylene films.

The non-oriented film is suitably used as a packaging material for foods, beverages, industrial parts, miscellaneous goods, toys, daily commodities, office supplies, and medical supplies, for example.

The thickness of the non-oriented film is usually less than 200 µm, preferably 10 to 150 µm, and more preferably 15 to 100 µm. Since the non-oriented film according to the present invention has excellent rigidity, it can be easily made thinner.

The non-oriented film has a number of fish eyes (FE), as measured using an FE counter and converted to the number per unit area (3,000 cm²), of preferably 100 or less, more preferably 70 or less, and still more preferably 50 or less. A non-oriented film having an FE number equal to or lower than the upper limit value can be said to have a good appearance.

The method for forming the non-oriented film is not particularly limited, and examples thereof include extrusion molding methods such as the T die method and the inflation method, compression molding, calendering, and casting.

The forming of the non-oriented film can be carried out, for example, as follows. Each of the above components constituting the propylene-based polymer composition may be directly fed into, for example, a hopper of a film forming machine, or each of the above components may be preliminarily mixed using, for example, a ribbon blender, a Banbury mixer, a Henschel mixer, or a super mixer, or further melt-kneaded using a kneading machine such as a single-screw or twin-screw extruder, or rolls to obtain the propylene-based polymer composition, followed by film formation.

A specific example of producing the non-oriented film, as described using the T-die method, is as follows. Each of the above components are fed into an extruder, the mixture is melt-kneaded at a temperature of usually 180 to 280°C, preferably 200 to 270°C, and then extruded in the form of a film from the die lip of a T-die. The molten film is cooled and taken up with a take-up unit using, for example, nip rolls to obtain the film.

Examples of methods for cooling the molten film include a cooling method using rolls and air cooling, such as the air-knife method or the air-chamber method; a narrow-gap cooling method such as the polishing roll method, the swing roll method, or the belt casting method; and a contact cooling method using a refrigerant, such as the water cooling method.

The resulting non-oriented film may be subjected to film treatment methods commonly used in film forming, such as a corona discharge treatment and a liquid coating treatment.

### <<Inorganic Oxide Layer>>

The laminated film is provided with a layer formed by vapor-depositing an inorganic oxide (hereinafter sometimes referred to simply as the "inorganic oxide layer").

From the viewpoint of having superior gas barrier properties, the above non-oriented film and the inorganic oxide layer are preferably partially or entirely in contact with each other.

From the viewpoint of having superior gas barrier properties and achieving excellent suppression of wrinkle formation, the inorganic oxide layer is preferably a layer formed by vapor-depositing an inorganic oxide onto the non-oriented film.

Examples of the method for vapor-depositing an inorganic oxide onto the non-oriented film include conventionally known methods, such as a chemical vapor deposition (CVD) method and a physical vapor deposition (PVD) method.

Examples of the inorganic oxide include inorganic oxides of aluminum, zinc, magnesium, and silicon. Of these, the inorganic oxide preferably contains aluminum oxide or silicon oxide, and more preferably is aluminum oxide or silicon oxide, from the viewpoint of achieving excellent gas barrier properties.

The thickness of the inorganic oxide layer is preferably 5 to 100 nm, more preferably 10 to 40 nm, still more preferably 10 to 30 nm, and particularly preferably 10 to 20 nm.

When the thickness of the inorganic oxide layer is within the above range, the gas barrier properties and suppression of wrinkle formation are superior. The thickness of the inorganic oxide layer is measured and determined by the method employed in the Examples to be described below.

The laminated film may be provided with two or more layers of the above non-oriented film and may further be provided with a layer other than the non-oriented film and the inorganic oxide layer (hereinafter also referred to as the "other layer"). When the laminated film has a multilayer structure, various functions can be further imparted to the film.

The other layer may be a single layer or may include two or more layers.

Examples of locations where the other layer may be provided include:
the side of the non-oriented film opposite to the inorganic oxide layer;
a location between the non-oriented film and the inorganic oxide layer where the non-oriented film and the inorganic oxide layer are not in contact with each other; and
the side of the inorganic oxide layer opposite to the non-oriented film.

Examples of the other layer include a biaxially oriented polypropylene film; a gas barrier layer against gases such as water vapor and oxygen; a sound-absorbing layer; a light-shielding layer; an adhesive layer; a pressure-sensitive adhesive layer; a colored layer; a conductive layer; a recycled resin-containing layer; and a coating layer.

Specific examples of materials for forming the other layer include olefin-based polymer compositions other than the resin A and the resin B, gas barrier resin compositions, and adhesive resin compositions.

From the viewpoint of achieving superior gas barrier properties, the laminated film is preferably further provided with a coating layer. The coating layer is preferably provided between the non-oriented film and the inorganic compound layer, or on the inorganic compound layer (that is, on the surface of the laminated film opposite to the non-oriented film). The coating layer may be formed on either one side or both sides of the inorganic compound layer.

When coating layers are formed on both sides of the inorganic compound layer, the gas barrier properties are further superior. The coating agent for forming the coating layer is not particularly limited, and examples thereof include known anchor coating agents and top coating agents. Examples of the coating agent include two-component mixed urethane coating agents such as "Trade name: Takenate" and "Trade name: Takelac," manufactured by Mitsui Chemicals, Inc.

The laminated film is preferably further provided with a biaxially oriented polypropylene film. When a biaxially oriented polypropylene film is provided, the biaxially oriented polypropylene film is preferably provided on the side opposite to the non-oriented film, and more preferably provided on the side opposite to the non-oriented film through an adhesive layer in contact with the inorganic oxide layer.

The above adhesive layer is not particularly limited, and examples thereof include a layer formed from an anchor coating agent such as a urethane-based or isocyanate-based adhesive, or from an adhesive resin such as a modified polyolefin such as an unsaturated carboxylic acid-grafted polyolefin. When the laminated film is provided with a biaxially oriented polypropylene film, it is preferable from the viewpoints of mono-materialization and reduction of environmental impact as compared with laminated films provided with a biaxially oriented film such as a biaxially oriented polyethylene terephthalate film or a biaxially oriented nylon film.

The method for forming the other layer is not particularly limited, and examples thereof include known forming methods such as a coextrusion method and an extrusion coating method.

The water vapor transmission rate of the laminated film is preferably 15 (g/m²·day) or less, and more preferably 10 (g/m²·day) or less. The water vapor transmission rate of the laminated film can be adjusted, for example, by changing the thickness of the layer obtained by vapor-depositing the inorganic oxide described above.

The oxygen gas transmission rate of the laminated film is preferably 2,000 (cm³/m²·day·atm) or less, more preferably 1,000 (cm³/m²·day·atm) or less, and still more preferably 100 (cm³/m²·day·atm) or less. The oxygen gas transmission rate can be adjusted by changing the thickness of the layer obtained by vapor-depositing the inorganic oxide described above.

The tensile modulus of the laminated film at 80°C is preferably 800 MPa or more, more preferably 850 MPa or more. The upper limit of the tensile modulus is not particularly limited, and may be, for example, 1,300 MPa or less.

In a preferred embodiment of the laminated film, the tensile modulus of the laminated film in the MD direction at 80°C is preferably 800 MPa or more, and more preferably 850 MPa or more. There is no limitation on the upper limit of the tensile modulus of the laminated film in the MD direction at 80°C, but it may be, for example, 1,300 MPa or less. The value of this tensile modulus can be adjusted, for example, by changing the take-up speed of the film during film formation.

The above tensile modulus is measured by the method employed in the Examples to be described below.

### [Uses]

The laminated film is used as a packaging material for foods, beverages, industrial parts, miscellaneous goods, toys, daily commodities, office supplies, and medical supplies, for example.

The laminated film can be used as a packaging film in a wide range of packaging fields, for example, in the field of packaging for various foods such as fresh foods such as fish and meat, dried foods such as snacks and noodles, and water-based foods such as soups and pickled foods; in the field of packaging for medical-related products used in pharmaceuticals of various forms such as tablets, powders, and liquids, and medical peripheral materials; and in the field of packaging for various electrical devices such as cassette tapes and electrical components.

### Examples

An embodiment of the present invention will be described below with reference to Examples, but the present invention is not limited to these Examples. The measurement and evaluation of various properties of the polymers, polymer compositions, non-oriented films, and laminated films obtained in each example were carried out as follows.

### [Intrinsic Viscosity [η]]

The intrinsic viscosity [η] (dl/g) was measured at 135°C in a tetralin solvent.

In the production of the resins B-1, B-2, and B-3, the intrinsic viscosity [η]₂ of the propylene-based polymer obtained in the second stage (corresponding to the propylene-based polymer (b2)) is a value calculated according to the following equation: ${\left[η\right]}_{2} = \left({\left[η\right]}_{total}\times 100-{\left[η\right]}_{1}\times {W}_{1}\right) / {W}_{2}$
[η]ₜₒₜₐₗ: intrinsic viscosity of the entire propylene-based polymer
[η]₁: intrinsic viscosity of the propylene-based polymer obtained in the first stage
W₁: mass fraction (%) of the propylene-based polymer obtained in the first stage
W₂: mass fraction (%) of the propylene-based polymer obtained in the second stage

### [Melt Flow Rate (MFR)]

The melt flow rate (MFR) (g/10 min) was measured in accordance with JIS-K7210 at a measurement temperature of 230°C under a load of 2.16 kgf (21.2 N).

### [Proportion of high molecular weight region having a molecular weight of 1,500,000 or more, ML, MH/ML, and molecular weight distribution (Mw/Mn)]

The proportion of a high molecular weight region having a molecular weight of 1,500,000 or more is the area ratio of the high molecular weight region having a molecular weight of 1,500,000 or more, to the total area enclosed by a molecular weight distribution curve (specifically, the molecular weight distribution curve and the horizontal axis) measured by gel permeation chromatography (GPC) using the apparatus and conditions described below.

Here, the horizontal axis represents the molecular weight (logarithmic value), and the vertical axis represents dw/dLog(M) [where w is the cumulative mass fraction, and M is the molecular weight]. The peak molecular weight MH on the high molecular weight side and the peak molecular weight ML on the low molecular weight side of the above molecular weight distribution curve were obtained, and MH/ML was calculated.

In addition, the average molecular weights (number-average molecular weight Mn and weight-average molecular weight Mw) were obtained from the above molecular weight distribution curve, and the molecular weight distribution (Mw/Mn) was calculated.

### - GPC Measurement Apparatus -

Gel permeation chromatograph HLC-8321 GPC/HT type (manufactured by Tosoh Corporation) Analyzer
Data processing software Empower 3 (manufactured by Waters) Measurement conditions
Column: TSKgel GMH6-HT × 2 + TSKgel GMH6-HTL × 2 (7.5 mm I.D.× 30 cm, both manufactured by Tosoh Corporation)
Column temperature: 140°C
Mobile phase: o-dichlorobenzene (containing 0.025% BHT)
Detector: Differential refractometer
Flow rate: 1.0 mL/min
Sample concentration: 0.1% (w/v)
Injection volume: 0.4 mL
Sampling time interval: 1 s
Column calibration: monodisperse polystyrene (manufactured by Tosoh Corporation)
Molecular weight conversion: PP conversion / universal calibration method (viscosity constant for PS (polystyrene): K PS = 0.000138 dl/g, α PS = 0.700; viscosity constant for PP (polypropylene): K PP = 0.000242 dl/g, α PP = 0.707)

### [Melting Point (Tm)]

The crystalline melting point was determined by measuring in accordance with JIS-K7121 using a differential scanning calorimeter (DSC, manufactured by PerkinElmer Co., Ltd. (Diamond DSC)) under the following measurement conditions. The apex of the endothermic peak in the fourth step during measurement under the following conditions was defined as the crystalline melting point (Tm). When a plurality of endothermic peaks are present, the apex of the endothermic peak having the greatest peak height is defined as the crystalline melting point (Tm). (Measurement conditions)
Measurement environment: nitrogen gas atmosphere
Sample amount: 5 mg
Sample shape: pressed film (formed at 230°C, thickness of 400 µm)
Sample pan: flat-bottomed aluminum sample pan
Step 1: The temperature is raised from 30°C to 200°C at 320°C/min,
   and held for 10 minutes.
Step 2: The temperature is lowered to 30°C at 20°C/min.
Step 3: The temperature is held at 30°C for 10 minutes.
Step 4: The temperature is raised to 200°C at 20°C/min.

### [Fish Eye (FE)]

The number of fish eyes in a film having a thickness of 50 µm, prepared with a 25 mm φ T-die film-forming machine manufactured by Research Laboratory of Plastics Technology Co., Ltd. using a resin B (propylene-based polymer (B)), was measured using a Fish Eye Counter (registered trademark) manufactured by Futec Inc. as a gel counter. Here, FEs having a size of 100 µm or more were measured. The measured number was expressed as the FE number per unit film area (3,000 cm²).

The film production conditions are as follows.
T-die film-forming machine: manufactured by Research Laboratory of Plastics Technology Co., Ltd.
Model: GT-25-A
Screw diameter: 25 mm, L/D = 24
Screw rotation speed: 60 rpm
Cylinder temperature settings: C1 = 230°C, C2 = 260°C
Head temperature setting: 260°C
T-die temperature settings: D1 to D3 = 260°C
T-die width: 230 mm, lip opening = 1 mm
Film winding speed: 4 m/s
Roll temperature: 65°C

The measurement conditions of the gel counter are as follows.

### Apparatus configuration

- Photodetector (4,096 pixels)
- Light projector
- Signal processing device
- Pulse generator
- Inter-device cable

### <Resin A>

- A propylene homopolymer (manufactured by Prime Polymer Co., Ltd., trade name: Prime Polypro F-704NP) having an MFR (230°C, 2.16 kg load) of 7.0 g/10 min, an intrinsic viscosity [η] of 1.8 dl/g, a melting point of 165°C, and an Mw/Mn of 4.8 was used as the resin A-1.
- A propylene homopolymer (manufactured by Prime Polymer Co., Ltd., trade name: Prime Polypro F107BA) having an MFR (230°C, 2.16 kg load) of 7.2 g/10 min, an intrinsic viscosity [η] of 1.8 dl/g, a melting point of 165°C, and an Mw/Mn of 4.8 was used as the resin A-2.
- The resin A-3 was prepared by the following production method.

### [Preparation of solid titanium catalyst component (a-3)]

A uniform solution was obtained by thermally reacting 95.2 g of anhydrous magnesium chloride, 442 mL of decane, and 390.6 g of 2-ethylhexyl alcohol at 130°C for 2 hours. Then, 21.3 g of phthalic anhydride was added to this solution, followed by stirring and mixing at 130°C for 1 hour to dissolve the phthalic anhydride.

After the homogeneous solution thus obtained was cooled to room temperature, 75 mL of the homogeneous solution was added dropwise over one hour to 200 mL of titanium tetrachloride held at -20°C. After the addition was complete, the temperature of this mixture was raised to 110°C over 4 hours. When the temperature reached 110°C, 5.22 g of diisobutyl phthalate (DIBP) was added, and the mixture was stirred and held at the same temperature for 2 hours.

After the two-hour reaction was complete, the solid portion was recovered by hot filtration, resuspended in 275 mL of titanium tetrachloride, and again heated at 110°C for two hours. After the reaction was complete, the solid portion was recovered again by hot filtration and thoroughly washed with decane and hexane at 110°C until no free titanium compound was detected in the solution.

The solid titanium catalyst component prepared as described above was preserved as a hexane slurry, and a portion thereof was dried to examine the catalyst composition. The solid titanium catalyst component contained 2.3% by mass of titanium, 61% by mass of chlorine, 19% by mass of magnesium, and 12.5% by mass of DIBP.

### [Production of Prepolymerization Catalyst (a-3)]

100.0 g of the solid titanium catalyst component (a-3), 22.4 mL of dicyclopentyldimethoxysilane, 65.6 mL of triethylaluminum, and 10 L of heptane were charged into a 20-L autoclave equipped with a stirrer, and the internal temperature was maintained at 15 to 20°C. Then, 600 g of propylene was charged and the mixture was reacted with stirring for 100 minutes. After the polymerization was complete, the solid component was allowed to settle, and removal of the supernatant and washing with heptane was performed twice. The resulting prepolymerization catalyst was resuspended in purified heptane, and the concentration of the solid catalyst component was adjusted to 1.0 g/L with heptane.

### [Production of Resin A-3]

To a tubular polymerization reactor having an internal volume of 58 L were continuously supplied propylene at 43 kg/hour, hydrogen at 163 NL/hour, the prepolymerization catalyst (a-3) at 0.55 g/hour, triethylaluminum at 1.9 mL/hour, and dicyclopentyldimethoxysilane at 3.8 mL/hour, and the polymerization was carried out under full-liquid conditions in the absence of a gas phase. The temperature of the tubular polymerization reactor was 70°C, and the pressure was 3.5 MPa/G.

The resulting slurry was transferred to a vessel polymerization reactor having an internal volume of 70 L and equipped with a stirrer, and further polymerization was carried out. To the polymerization reactor was supplied propylene at 45 kg/hour, and hydrogen so that the hydrogen concentration in the gas phase was 15.8 mol%. The polymerization was carried out at a polymerization temperature of 63°C and a pressure of 3.2 MPa/G.

After deactivation of the resulting slurry, propylene was evaporated to obtain a powdery propylene homopolymer (resin A-3). The resin A-3 had an MFR of 30 g/10 min and an Mw/Mn of 5.2.

### [Production of Resin B-1]

### (1) Preparation of Solid Catalyst Component

In a reactor equipped with a stirrer (inner volume: 500 liters), which had been sufficiently purged with nitrogen gas, were added 30 kg of the above magnesium compound (unmilled), 150 liters of purified heptane (n-heptane), 4.5 liters of silicon tetrachloride, and 5.4 liters of di-n-butyl phthalate. The system was maintained at 90°C, and 144 liters of titanium tetrachloride was added with stirring. The mixture was then reacted at 110°C for 2 hours, after which the solid component was separated and washed with purified heptane at 80°C. Furthermore, 228 liters of titanium tetrachloride was added, and the mixture was reacted at 110°C for 2 hours, followed by thorough washing with purified heptane to obtain a solid catalyst component.

### (2) Production of Prepolymerization Catalyst

To 200 mL of heptane were added 10 mmol of triethylaluminum, 2 mmol of dicyclopentyldimethoxysilane, and 1 mmol of the solid catalyst component obtained in (1) above in terms of titanium atoms. The internal temperature was held at 20°C, and propylene was continuously introduced with stirring. After 60 minutes, stirring was stopped, and as a result, a prepolymerization catalyst was obtained in which 4.0 g of propylene had been polymerized per gram of the solid catalyst.

### (3) Main Polymerization

336 liters of propylene was charged into a 600-liter autoclave and heated to 60°C. Thereafter, 8.7 mL of triethylaluminum, 11.4 mL of dicyclopentyldimethoxysilane, and 2.9 g of the prepolymerization catalyst obtained in (2) were charged to initiate polymerization. 75 minutes after the initiation of polymerization, the temperature was lowered to 50°C over 10 minutes (completion of the first stage of polymerization).

The intrinsic viscosity [η] of the propylene-based polymer (b1) polymerized under the same conditions as in the first stage was 11 dl/g.

After cooling, hydrogen was continuously introduced so that the pressure remained constant at 3.3 MPaG, and the polymerization was carried out for 151 minutes. Next, the vent valve was opened, and the unreacted propylene was purged through an integrating flow meter (completion of the second stage of polymerization).

Thus, 51.8 kg of a powdery propylene-based polymer, resin B-1, was obtained.

To the resin B-1, 2,000 ppm of Irganox 1010 (manufactured by Ciba Specialty Chemicals Corporation), 2,000 ppm of Irgafos 168 (manufactured by Ciba Specialty Chemicals Corporation), and 1,000 ppm of Sandostab P-EPQ (manufactured by Clariant (Japan) K.K.) were added as antioxidants, and 1,000 ppm of calcium stearate was added as a neutralizer. The mixture was melt-kneaded with a twin-screw extruder to obtain the resin B-1 in pellet form. The resin B-1 finally obtained in this manner had an MFR of 1.2 g/10 min. In addition, the mass fraction (ratio) of the propylene-based polymer (b1) produced in the first stage of polymerization in the finally obtained resin B-1, as calculated from the material balance, was 25% by mass.

The physical properties of the obtained resin B-1 are shown in Table 1.

### [Production of Resin B-2]

### (1) Preparation of Solid Catalyst Component

In a reactor equipped with a stirrer (inner volume: 500 liters), which had been sufficiently purged with nitrogen gas, were added 30 kg of the above magnesium compound (unmilled), 150 liters of purified heptane (n-heptane), 4.5 liters of silicon tetrachloride, and 5.4 liters of di-n-butyl phthalate. The system was maintained at 90°C, and 144 liters of titanium tetrachloride was added with stirring. The mixture was then reacted at 110°C for 2 hours, after which the solid component was separated and washed with purified heptane at 80°C. Furthermore, 228 liters of titanium tetrachloride was added, and the mixture was reacted at 110°C for 2 hours, followed by thorough washing with purified heptane to obtain a solid catalyst component.

### (2) Production of Prepolymerization Catalyst

To 200 mL of heptane were added 10 mmol of triethylaluminum, 2 mmol of dicyclopentyldimethoxysilane, and 1 mmol of the solid catalyst component obtained in (1) in terms of titanium atoms. The internal temperature was held at 20°C, and propylene was continuously introduced with stirring. After 60 minutes, stirring was stopped, and as a result, a prepolymerization catalyst was obtained in which 4.0 g of propylene had been polymerized per gram of the solid catalyst.

### (3) Main Polymerization

336 liters of propylene was charged into a 600-liter autoclave and heated to 60°C. Thereafter, 8.7 mL of triethylaluminum, 11.4 mL of dicyclopentyldimethoxysilane, and 2.9 g of the prepolymerization catalyst obtained in (2) were charged to initiate polymerization. 45 minutes after the initiation of polymerization, the temperature was lowered to 50°C over 10 minutes (completion of the first stage of polymerization).

The intrinsic viscosity [η] of the propylene-based polymer (b1) polymerized under the same conditions as in the first stage was 11 dl/g.

After cooling, hydrogen was continuously introduced so that the pressure remained constant at 2.1 MPaG, and the polymerization was carried out for 240 minutes. Next, the vent valve was opened, and the unreacted propylene was purged through an integrating flow meter (completion of the second stage of polymerization).

Thus, 48 kg of a powdery resin B-2 was obtained.

To the resin B-2, 2,000 ppm of Irganox 1010 (manufactured by Ciba Specialty Chemicals Corporation), 2,000 ppm of Irgafos 168 (manufactured by Ciba Specialty Chemicals Corporation), and 1,000 ppm of Sandostab P-EPQ (manufactured by Clariant (Japan) K.K.) were added as antioxidants, and 1,000 ppm of calcium stearate was added as a neutralizer. The mixture was melt-kneaded with a twin-screw extruder to obtain the resin B-2 in pellet form. The resin B-2 finally obtained in this manner had an MFR of 0.5 g/10 min. In addition, the ratio of the propylene-based polymer (b1) produced in the first stage of polymerization in the finally obtained resin B-2, as calculated from the material balance, was 17% by mass. The physical properties of the obtained resin B-2 are shown in Table 1.

**[Table 1]**

| | | | | Resin B-1 | Resin B-2 |
|---|---|---|---|---|---|
| | Propylene-based polymer (b1) | Intrinsic viscosity [η] | dl/g | 11 | 11 |
| | | Mass fraction | % by mass | 25 | 17 |
| | Propylene-based polymer (b2) | Intrinsic viscosity [η] | dl/g | 0.99 | 2.29 |
| | | Mass fraction | % by mass | 75 | 83 |
| Physical properties | Resin (B) | Intrinsic viscosity [η] | dl/g | 3.49 | 3.77 |
| | | MFR (230°C, 2.16 kg load) | g/10 min | 1.2 | 0.7 |
| | | Proportion of high molecular weight components having molecular weight of 1,500,000 or more | % by mass | 15.5 | 11 |
| | | ML | - | 23000 | 190000 |
| | | MH/ML | - | 126 | 15 |
| | | Fish eyes | pcs | 8 | 5 |

In Table 1, "mass fraction (% by mass)" indicates the mass fractions of the propylene-based polymer obtained in the first stage (corresponding to the propylene-based polymer (b1)) and the propylene-based polymer obtained in the second stage (corresponding to the propylene-based polymer (b2)) in the Production Examples of the resins B-1 and B-2, which were determined from the amount of heat of reaction generated during polymerization.

### [Examples 1 and 4]

### (Production of Non-Oriented Film)

Using a resin composition consisting of 90 parts by mass of the propylene-based polymer resin A-1 obtained in Production Example 1 and 10 parts by mass of the propylene-based polymer resin B-1, a non-oriented film having a thickness of 30 µm was produced under the following forming conditions using a non-oriented film forming machine equipped with an extruder (one unit) with a screw diameter of 75 mm connected to a single-layer die with a width of 600 mm.
- Resin temperature: 248°C
- Chill roll temperature: 30°C
- Forming speed: 150 m/min

In addition, for the various evaluations described below, test pieces of approximately A4 size (210 mm in the vertical (TD) direction × 290 mm in the extrusion (MD) direction) were prepared.

### (Production of Laminated Film)

The non-oriented film formed above was cut to a width of 130 mm and set in a vacuum vapor deposition apparatus equipped with a film feeding unit and a winding unit. After creating a vacuum of 2.3 × 10⁻² Pa, the film was wound along a cooled metal drum at -20°C. Aluminum oxide was thermally vapor-deposited to deposit an inorganic oxide on the surface of the film in contact with the cooled metal drum, thereby producing a laminated film.

In addition, for the various evaluations described below, test pieces of approximately A4 size (210 mm in the vertical (TD) direction × 290 mm in the extrusion (MD) direction) were prepared.

### - Measurement and Evaluation -

### [Thickness of Inorganic Oxide Layer]

For the laminated film, the thickness of the inorganic oxide layer was measured as follows.

The obtained laminated film was cut with a microtome to expose a cross section. The cross section was observed using a scanning electron microscope (SEM), and the thickness of the inorganic oxide layer was measured. The SEM observation was performed using the model Regulus 8220 manufactured by Hitachi High-Tech Corporation, with a backscattered electron detector.

### [Tensile Modulus]

The tensile modulus (MPa) was measured in accordance with JIS K7161. The measurement was carried out in the extrusion (MD) direction of forming under conditions of 23°C and 80°C, and in the vertical (TD) direction under a condition of 23°C. The higher the tensile modulus, the higher the rigidity.

### [Haze]

The measurement was carried out in accordance with ASTM D-1003 (JIS K7105). The smaller the haze value, the better the transparency.

### [Gas Barrier Properties]

### (1) Water Vapor Transmission Rate

The water vapor transmission rate (g/m²·day) was measured using a water vapor transmission rate measuring apparatus (model: PERMATRAN-W3/33, manufactured by MOCON), at a test temperature of 40°C, a relative humidity of 90%, and a permeation area of 50 cm².

### (2) Oxygen Permeability

The oxygen permeability (cm³/m²·day·atm) was measured using a differential pressure type gas permeation rate measuring apparatus (manufactured by Toyo Seiki Seisaku-sho, Ltd.), at a test temperature of 23°C, a relative humidity of 0%, and with oxygen (100%) as the test gas.

### [Wrinkles]

The surface on the non-oriented film side of the obtained laminated film was visually observed, and wrinkles in the TD direction were evaluated according to the following evaluation criteria. An A or B according to the following evaluation criteria indicates that the film is excellent in suppressing wrinkle formation.

### - Evaluation Criteria -

A: The number of wrinkles is 2 or less, and the film is excellent in suppressing wrinkle formation.

B: The number of wrinkles is 3 to 9, which is at a level that does not cause any practical problem.

C: The number of wrinkles is 10 or more, and the film is inferior in suppressing wrinkle formation.

### [Examples 2, 3, 5, and 6, Comparative Examples 1 to 6, and Reference Examples 1 to 6]

A non-oriented film was produced in the same manner as in Example 1, and a laminated film was produced in the same manner as in Example 4, except that the resins A and B were changed to the resins shown in Table 2, 3, or 4. The obtained non-oriented film and laminated film were each subjected to various evaluations. The results are shown in Tables 2, 3, and 4.

**[Table 2]**

| | | | | Example 1 | Example 2 | Example 3 |
|---|---|---|---|---|---|---|
| Propylene-based polymer composition | Resin A | Resin A-1 | parts by mass | 90 | - | - |
| | | Resin A-2 | | - | 90 | |
| | | Resin A-3 | | - | - | 90 |
| | Resin B | Resin B-1 | parts by mass | - | - | - |
| | | Resin B-2 | | 10 | 10 | 10 |
| | Molecular weight distribution | | Mw/Mn | 7.6 | 7.8 | 7.8 |
| | MFR (230°C, 2.16 kg load) | | g/10 min | 5 | 5 | 20 |
| Non-oriented film | | Forming speed | m/min | 150 | 150 | 150 |
| | | Film thickness | µm | 30 | 30 | 30 |
| Inorganic oxide layer | | AlOx | nm | - | - | - |
| Evaluation | Physical properties | Tensile modulus (MD) 23°C | Mpa | 1800 | 2200 | 3050 |
| | | Tensile modulus (TD) 23°C | Mpa | 1600 | 2000 | 2350 |
| | | Tensile modulus (MD) 80°C | Mpa | 800 | 850 | 1150 |
| | | Tensile modulus (TD) 80°C | Mpa | 750 | 800 | 1100 |
| | | Haze | | 5.5 | 4.7 | 2.9 |
| | | Water vapor transmission rate | g/m²·day | 9 | 8 | 10 |
| | | Oxygen permeability | cm³/m²·day·atm | 1900 | 1400 | 3000 |
| | Appearance | Wrinkles | - | - | - | - |

**[Table 2] (continued)**

| | | | | Example 4 | Example 5 | Example 6 |
|---|---|---|---|---|---|---|
| Propylene-based polymer composition | Resin A | Resin A-1 | parts by mass | 90 | - | - |
| | | Resin A-2 | | - | 90 | - |
| | | Resin A-3 | | - | - | 90 |
| | Resin B | Resin B-1 | parts by mass | - | - | - |
| | | Resin B-2 | | 10 | 10 | 10 |
| | Molecular weight distribution | | Mw/Mn | 7.6 | 7.8 | 7.8 |
| | MFR (230°C, 2.16 kg load) | | g/10 min | 5 | 5 | 20 |
| Non-oriented film | | Forming speed | m/min | 150 | 150 | 150 |
| | | Film thickness | µm | 30 | 30 | 30 |
| Inorganic oxide layer | | AlOx | nm | 10 | 10 | 10 |
| Evaluation | Physical properties | Tensile modulus (MD) 23°C | Mpa | 1800 | 2200 | 3050 |
| | | Tensile modulus (TD) 23°C | Mpa | 1600 | 2000 | 2350 |
| | | Tensile modulus (MD) 80°C | Mpa | 800 | 850 | 1150 |
| | | Tensile modulus (TD) 80°C | Mpa | 750 | 800 | 1100 |
| | | Haze | | 5.5 | 4.7 | 2.9 |
| | | Water vapor transmission rate | g/m²·day | 9 | 10 | 9 |
| | | Oxygen permeability | cm³/m²·day·atm | 800 | 580 | 710 |
| | Appearance | Wrinkles | - | A | A | A |

**[Table 3]**

| | | | | Comparative Example 1 | Comparative Example 2 | Comparative Example 3 |
|---|---|---|---|---|---|---|
| Propylene-based polymer composition | Resin A | Resin A-1 | parts by mass | 100 | - | - |
| | | Resin A-2 | | - | 100 | - |
| | | Resin A-3 | | - | - | 100 |
| | Resin B | Resin B-1 | parts by mass | - | - | - |
| | | Resin B-2 | | - | - | - |
| | Molecular weight distribution | | Mw/Mn | 5.0 | 4.5 | 5.2 |
| | MFR (230°C, 2.16 kg load) | | g/10 min | 7 | 7 | 30 |
| Non-oriented film | | Molding speed | m/min | 150 | 150 | 150 |
| | | Film thickness | µm | 30 | 30 | 30 |
| Inorganic oxide layer | | AlOx | nm | - | - | - |
| Evaluation | Physical properties | Tensile modulus (MD) 23°C | Mpa | 1150 | 1300 | 1500 |
| | | Tensile modulus (TD) 23°C | Mpa | 1100 | 1250 | 1500 |
| | | Tensile modulus (MD) 80°C | Mpa | 350 | 300 | 350 |
| | | Tensile modulus (TD) 80°C | Mpa | 350 | 300 | 350 |
| | | Haze | - | 3.5 | 3.1 | 2 |
| | | Water vapor transmission rate | g/m²·day | 12 | 11 | 13 |
| | | Oxygen permeability | cm³/m²·day·atm | 2840 | 2510 | 3800 |
| | Appearance | Wrinkles | - | - | - | - |

**[Table 3] (continued)**

| | | | | Comparative Example 4 | Comparative Example 5 | Comparative Example 6 |
|---|---|---|---|---|---|---|
| Propylene-based polymer composition | Resin A | Resin A-1 | parts by mass | 100 | - | - |
| | | Resin A-2 | | - | 100 | - |
| | | Resin A-3 | | - | - | 100 |
| | Resin B | Resin B-1 | parts by mass | - | - | - |
| | | Resin B-2 | | - | - | - |
| | Molecular weight distribution | | Mw/Mn | 5.0 | 4.5 | 5.2 |
| | MFR (230°C, 2.16 kg load) | | g/10 min | 7 | 7 | 30 |
| Non-oriented film | | Molding speed | m/min | 150 | 150 | 150 |
| | | Film thickness | µm | 30 | 30 | 30 |
| Inorganic oxide layer | | AlOx | nm | 10 | 10 | 10 |
| Evaluation | Physical properties | Tensile modulus (MD) 23°C | Mpa | 1150 | 1300 | 1500 |
| | | Tensile modulus (TD) 23°C | Mpa | 1100 | 1250 | 1500 |
| | | Tensile modulus (MD) 80°C | Mpa | 350 | 300 | 350 |
| | | Tensile modulus (TD) 80°C | Mpa | 350 | 300 | 350 |
| | | Haze | - | 3.5 | 3.1 | 2 |
| | | Water vapor transmission rate | g/m²·day | 10 | 10 | 11 |
| | | Oxygen permeability | cm³/m²·day·atm | 900 | 660 | 990 |
| | Appearance | Wrinkles | - | C | C | C |

**[Table 4]**

| | | | | Reference Example 1 | Reference Example 2 | Reference Example 3 |
|---|---|---|---|---|---|---|
| Propylene-based polymer composition | Resin A | Resin A-1 | parts by mass | 90 | - | - |
| | | Resin A-2 | | - | 90 | - |
| | | Resin A-3 | | - | - | 90 |
| | Resin B | Resin B-1 | parts by mass | 10 | 10 | 10 |
| | | Resin B-2 | | - | - | - |
| | Molecular weight distribution | | Mw/Mn | 7.8 | 8.0 | 8.0 |
| | MFR (230°C, 2.16 kg load) | | g/10 min | 6 | 6 | 22 |
| Non-oriented film | | Molding speed | m/min | 150 | 150 | 150 |
| | | Film thickness | µm | 30 | 30 | 30 |
| Inorganic oxide layer | | AlOx | nm | - | - | - |
| Evaluation | Physical properties | Tensile modulus (MD) 23°C | Mpa | 1800 | 2200 | 3050 |
| | | Tensile modulus (TD) 23°C | Mpa | 1600 | 2000 | 2350 |
| | | Tensile modulus (MD) 80°C | Mpa | 800 | 850 | 1150 |
| | | Tensile modulus (TD) 80°C | Mpa | 750 | 800 | 1100 |
| | | Haze | - | 6 | 5 | 3.1 |
| | | Water vapor transmission rate | g/m²·day | 9 | 9 | 10 |
| | | Oxygen permeability | cm³/m²·day·atm | 2150 | 2100 | 3200 |
| | Appearance | Wrinkles | - | - | - | - |

**[Table 4] (continued)**

| | | | | Reference Example 4 | Reference Example 5 | Reference Example 6 |
|---|---|---|---|---|---|---|
| Propylene-based polymer composition | Resin A | Resin A-1 | parts by mass | 90 | - | - |
| | | Resin A-2 | | - | 90 | 90 |
| | | Resin A-3 | | - | - | - |
| | Resin B | Resin B-1 | parts by mass | 10 | 10 | 10 |
| | | Resin B-2 | | - | - | - |
| | Molecular weight distribution | | Mw/Mn | 7.8 | 8.0 | 8.0 |
| | MFR (230°C, 2.16 kg load) | | g/10 min | 6 | 6 | 6 |
| Non-oriented film | | Molding speed | m/min | 150 | 150 | 150 |
| | | Film thickness | µm | 30 | 30 | 30 |
| Inorganic oxide layer | | AlOx | nm | 10 | 10 | 30 |
| Evaluation | Physical properties | Tensile modulus (MD) 23°C | Mpa | 1800 | 2200 | 2200 |
| | | Tensile modulus (TD) 23°C | Mpa | 1600 | 2000 | 2000 |
| | | Tensile modulus (MD) 80°C | Mpa | 800 | 850 | 850 |
| | | Tensile modulus (TD) 80°C | Mpa | 750 | 800 | 800 |
| | | Haze | - | 6 | 5.1 | 5.1 |
| | | Water vapor transmission rate | g/m²·day | 9 | 8 | 5 |
| | | Oxygen permeability | cm³/m²·day·atm | 1000 | 800 | 190 |
| | Appearance | Wrinkles | - | A | A | A |

In Tables 2 to 4, "-" indicates that the corresponding component is not contained or that measurement or evaluation was not conducted.

It can be seen that the non-oriented films of Examples 1 to 3 are superior in suppression of wrinkle formation and in gas barrier properties compared to the non-oriented films of Comparative Examples 1 to 3. It can also be seen that the laminated films of Examples 4 to 6 are superior in suppression of wrinkle formation and in gas barrier properties compared to the laminate films of Comparative Examples 4 to 6. Reference Examples 1 to 6 are reference examples because the intrinsic viscosity [η] of the propylene-based polymer (b2) contained in the resin B-1 is 0.99, which is outside the range of greater than 1.5 dl/g and 2.5 dl/g or less.

## Claims

1. A laminated film comprising:
a non-oriented film formed from a polypropylene-based polymer composition comprising 85 to 95% by mass of the following resin A and 5 to 15% by mass of the following resin B (wherein the total amount of the resin A and the resin B is 100% by mass); and
a layer formed by vapor-depositing an inorganic oxide;
Resin A: a propylene-based polymer having a melting point of 120 to 170°C and an intrinsic viscosity [η] of greater than 1.5 dl/g and 5.0 dl/g or less;
Resin B: a propylene-based polymer comprising 10 to 40% by mass of a propylene-based polymer (b1) having an intrinsic viscosity [η] in the range of 10 to 12 dl/g, and 60 to 90% by mass of a propylene-based polymer (b2) having an intrinsic viscosity [η] of greater than 1.5 dl/g and 2.5 dl/g or less (wherein the total amount of the propylene-based polymer (b1) and the propylene-based polymer (b2) is 100% by mass).

2. The laminated film according to claim 1, wherein the inorganic oxide comprises aluminum oxide or silicon oxide.

3. The laminated film according to claim 1, wherein the layer formed by vapor-depositing the inorganic oxide has a thickness of 5 to 100 nm.

4. The laminated film according to claim 1, wherein an oxygen transmission rate is 2,000 (cm³/m²·day·atm) or less.

5. The laminated film according to claim 1, wherein a tensile modulus at 80°C is 800 MPa or more.

6. The laminated film according to claim 1, wherein the tensile modulus in the MD direction at 80°C is 800 MPa or more.

7. The laminated film according to any one of claims 1 to 6, further comprising a biaxially oriented polypropylene film.

8. A polypropylene-based polymer composition comprising:
85 to 95% by mass of the following resin A; and
5 to 15% by mass of the following resin B,
wherein the total amount of the resin A and the resin B is 100% by mass;
Resin A: a propylene-based polymer having a melting point of 120 to 170°C and an intrinsic viscosity [η] of greater than 1.5 dl/g and 5.0 dl/g or less;
Resin B: a propylene-based polymer comprising 10 to 40% by mass of a propylene-based polymer (b1) having an intrinsic viscosity [η] in the range of 10 to 12 dl/g, and 60 to 90% by mass of a propylene-based polymer (b2) having an intrinsic viscosity [η] of greater than 1.5 dl/g and 2.5 dl/g or less (wherein the total amount of the propylene-based polymer (b1) and the propylene-based polymer (b2) is 100% by mass).

9. A non-oriented film formed from the polypropylene-based polymer composition according to claim 8.

10. A propylene-based polymer comprising:
10 to 40% by mass of a propylene-based polymer (b1) having an intrinsic viscosity [η] in the range of 10 to 12 dl/g; and
60 to 90% by mass of a propylene-based polymer (b2) having an intrinsic viscosity [η] of greater than 1.5 dl/g and 2.5 dl/g or less (wherein the total amount of the propylene-based polymer (b1) and the propylene-based polymer (b2) is 100% by mass).
